# FASCICULE DE BREVET EUROPEEN

(11) **EP 3 560 147 B1**
(45) Date de publication et mention de la délivrance du brevet: **26.01.2022**
(21) Numéro de dépôt: 17829244.7
(22) Date de dépôt: 18.12.2017
(51) Int. Cl.: H04L 12/28, H04L 29/08

(54) **AUTOMATISATION DES ÉCHANGES ENTRE OBJETS COMMUNICANTS**
AUTOMATISIERUNG DES AUSTAUSCHES ZWISCHEN KOMMUNIKATIONSOBJEKTEN
AUTOMATION OF EXCHANGES BETWEEN COMMUNICATING OBJECTS

(30) Priorité: 20.12.2016 FR 1662825
(43) Date de publication de la demande: 30.10.2019
(73) Titulaire: ORANGE, 92130 Issy-les-Moulineaux (FR)
(72) Inventeur: BRUNO, Adrien, 92326 Châtillon Cedex (FR); GIRAUDON, Vincent, 92326 Châtillon Cedex (FR)
(86) Numéro de dépôt international: PCT/FR2017/053663
(87) Numéro de publication internationale: WO 2018/115690

(56) Documents cités:
- EP-A1- 2 887 704
- US-A1- 2012 226 366
- US-A1- 2013 067 065
- US-A1- 2016 150 350

## Description

### DOMAINE DE L'INVENTION

Le domaine de l'invention est celui des interactions entre objets, en particulier entre objets communicants (aussi appelés objets connectés) tels que des ordinateurs, tablettes, téléphones intelligents (en anglais « smartphones »), mais également des caméras de type webcams, des stations météo, des capteurs, des thermostats, etc.

Le réseau de communication utilisé par ces objets pour interagir entre eux est quelconque ; par exemple celui-ci peut être un réseau Internet, un réseau local, etc.

La technologie de communication utilisée par ces objets est quelconque ; par exemple celle-ci peut-être la technologie Wifi, Bluetooth, ZigBee, Z-Wave, etc.

En particulier, l'invention trouve des applications dans le domaine du contrôle à distance d'objets connectés, dans le domaine de la domotique, etc.

### ARRIÈRE-PLAN TECHNOLOGIQUE

Le domaine de l'Internet des Objets est celui des échanges de données entre objets communicants. En particulier, ce domaine utilise des techniques permettant à ces objets communicants d'interagir à distance à travers un réseau d'objets.

La gestion des objets communicants s'effectue classiquement par des tiers de confiance : le référencement de ces objets s'effectue dans une base de données centralisée, notamment publique, l'échange de données entre ces objets s'effectue à travers une plateforme d'un ou plusieurs fournisseurs de services, le processus de facturation de services s'effectue également par l'intermédiaire d'un ou plusieurs tiers, le stockage des traces de ces échanges s'effectue également dans des bases de données de type centralisées, etc.

Ainsi, les interactions entre objets communicants sont dépendantes de plateformes de service qui centralisent les requêtes émises et reçues par ces objets, en particulier lorsque ces interactions engendrent des rétributions financières. Les utilisateurs de ces objets ne possèdent, en outre, pas de solutions pour contrôler l'utilisation des données échangées par et à travers ces objets.

EP2887704A1 décrit un procédé d'interaction entre un premier objet numérique et au moins un deuxième objet numérique, lesdits premier et deuxième objets numériques étant représentatifs respectivement d'un premier et deuxième dispositif, ce procédé comprenant les étapes: obtention, pour chacun des premier et deuxième objets numériques, d'au moins une information, dite propriété fonctionnelle, représentative d'au moins une fonction du dispositif représenté par l'objet numérique concerné ; mémorisation d'une association entre au moins une fonction du premier dispositif, dite première fonction, et au moins une fonction du deuxième dispositif, dite deuxième fonction, l'association étant définie à partir des propriétés fonctionnelles obtenues; établissement d'une liaison de communication via au moins un réseau entre un premier équipement communicant apte à piloter le premier dispositif et un deuxième équipement communicant apte à piloter le deuxième dispositif; en cas de déclenchement d'une exécution par le premier dispositif d'une première fonction et lorsqu'une association est mémorisée entre ladite première fonction et une dite deuxième fonction d'un deuxième dispositif, envoi d'une notification du premier équipement communicant vers le deuxième équipement communicant au travers de ladite liaison de communication afin de déclencher l'exécution de ladite deuxième fonction par ledit deuxième dispositif.

L'invention offre une solution ne présentant pas les inconvénients de l'état de la technique.

### L'INVENTION

A cet effet, selon un premier aspect, il est proposé un procédé de gestion des interactions via un réseau de communication entre un premier objet communicant et un deuxième objet communicant reliés par une liaison, la liaison connectant au moins une fonction du premier objet à au moins une fonction du deuxième objet, le réseau incluant un ensemble d'objets, le procédé comprenant dans le premier objet :
- la mémorisation d'au moins un accord d'exécution relatif à une liaison entre deux objets dudit ensemble d'objets;
- l'activation de la liaison connectant une fonction du premier objet à une fonction du deuxième objet, ladite activation comprenant :
- l'accès à un accord d'exécution relatif à ladite liaison connectant une fonction du premier objet à une fonction du deuxième objet, comprenant la recherche dans les autres objets communicants du réseau de parties dudit accord non mémorisées dans le premier objet, et la mémorisation dans le premier objet desdites parties trouvées dans au moins un autre objet du réseau ;
- exécuter ledit accord d'exécution relatif à la liaison connectant une fonction du premier objet à une fonction du deuxième objet.

Le procédé met en œuvre une gestion des interactions entre deux objets communicants grâce à un accord d'exécution stocké au sein du réseau d'objets, et en particulier dans le premier objet.

Ainsi, le procédé offre l'avantage de permettre à une liaison connectant des fonctions de deux objets du réseau, d'être activée selon un accord d'exécution, sans l'intervention d'un tiers de confiance.

Une fonction d'un objet communicant correspond soit à une fonction d'un objet réel (objet, téléviseur, lampe, caméra, etc.), soit à une fonction logicielle mise en œuvre par un objet communicant.

Les fonctions d'un objet sont ses aptitudes, telles que la vision, la projection d'images, la capacité à chauffer, la capacité de se mouvoir, etc. Par exemple, un téléviseur présente les fonctions de réception d'images et d'affichage de ces images. Une caméra « PTZ » présente la fonction de capture d'images dans n'importe quelle direction de visée, grâce aux mouvements de la caméra sur deux axes.

Une liaison entre deux objets tels un smartphone et une caméra, peut relier ces deux objets en associant leurs fonctions respectives que sont le mouvement (une des fonctions du smartphone étant de mesurer sa position relativement à un repère fixe dans l'espace et par exemple de fournir deux angles par rapport à une orientation de base, et une des fonctions de la caméra étant de recevoir des paramètres angulaires et de s'orienter dans cette même direction) et le traitement des images (d'autres fonctions du smartphone étant de recevoir des images et de les projeter sur son écran, et une autre fonction de la caméra étant de capturer des images). Ainsi, les deux objets, par la complémentarité de leurs fonctions, peuvent être associés.

On obtient ensuite, lorsqu'un mouvement du smartphone est détecté, le déclenchement d'un mouvement équivalent de la caméra, et lorsque des images sont capturées par la caméra, le déclenchement de leur projection sur l'écran du smartphone.

Le résultat de cette association entre deux objets communicants, via leurs fonctions respectives, est une liaison automatisée entre ces deux objets communicants, appelée « intrication ». Deux objets communicants ainsi associés sont dits « intriqués ».

Une fois l'association mémorisée entre deux fonctions de deux objets, le déclenchement de la première fonction sur le premier objet va déclencher l'exécution de la deuxième fonction sur le deuxième objet. La liaison est alors dite « activée ».

Selon un mode de mise en œuvre, une activation d'une liaison connectant une fonction du premier objet comprend un accès à un accord d'exécution relatif à la liaison correspondante et une exécution d'un accord d'exécution relatif à la liaison correspondante.

Ce mode de mise en œuvre permet une gestion automatisée des interactions entre objets communicants. Par gestion automatisée est entendu un contrôle des règles d'interactions entre deux objets définies dans des programmes informatiques que sont les accords d'exécution. En effet, ces accords appelés également contrats ou contrats intelligents ou même « smart contrats » par l'homme du métier, sont des programmes informatiques qui s'exécutent de manière autonome. Les modalités de réalisation des interactions entre objets ne sont pas contrôlées par un tiers de confiance mais de manière automatisée par l'existence même de ce programme informatique dans le réseau.

Un accord d'exécution relatif à une liaison connectant deux fonctions de deux objets peut déterminer le déclenchement de la première fonction sur le premier objet. En effet, l'accord d'exécution peut vérifier le bon fonctionnement de tous les composants nécessaires à l'activation d'une liaison.

Selon un autre mode de mise en œuvre, qui pourra être mis en œuvre alternativement ou cumulativement avec le précédent, un accès à un accord d'exécution relatif à une liaison connectant une fonction du premier objet comprend une recherche à travers le réseau des parties dudit accord non mémorisées dans le premier objet, et mémoriser lesdites parties trouvées dans le premier objet.

Ce mode de mise en œuvre permet à tout objet du réseau d'accéder à tout accord d'exécution présent dans le réseau d'objets afin, par exemple, que tout objet du réseau puisse vérifier l'existence, le contenu ou l'authenticité d'un accord. En effet, un accord est intégré dans un système informatique de stockage décentralisé formé par des objets qui constituent un réseau de nœuds, un objet stockant tout ou partie d'un accord d'exécution. Un accord d'exécution est dupliqué plusieurs fois dans le réseau. Tout objet du réseau peut interroger un ou d'autres objets du réseau pour récupérer tout ou partie d'un accord d'exécution stocké dans les nœuds du réseau.

L'émergence de nouvelles technologies de stockage et de transmission d'informations de type « décentralisées » à travers un réseau informatique, ouvre la porte à de nouvelles perspectives d'exécution autonome d'accords d'exécution relatifs à des intrications. Ces technologies, par leur architecture, sont performantes et laissent entrevoir de nouvelles perspectives de modèles économiques. Le modèle Bitcoin est un exemple de monétisation de services à travers un réseau dit décentralisé : la technologie « blockchain » est une technologie sécurisée et fonctionnant sans organe central de contrôle. A termes, des blockchains pourraient, par exemple, remplacer la plupart des tiers de confiance centralisant des systèmes informatiques distribués.

Selon un autre mode de mise en œuvre, qui pourra être mis en œuvre alternativement ou cumulativement avec les précédents, une exécution d'un accord d'exécution relatif à une liaison connectant une fonction du premier objet comprend l'accès à des traces d'exécution de la liaison correspondante, et une vérification des traces d'exécution de la liaison correspondante.

Ce mode de mise en œuvre permet à tout objet du réseau de récupérer et mémoriser des traces d'exécution d'une liaison automatisée entre deux objets du réseau d'objets afin de vérifier les modalités de réalisation d'interactions entre objets. Les traces d'exécution sont des données stockées dans les nœuds du réseau. Par réseau est entendu un ou plusieurs réseaux à travers le ou lesquels circuleront les données échangées nécessaires à la mise en œuvre du procédé. Les nœuds du réseau comprennent des objets communicants du réseau, des serveurs et ordinateurs du réseau, etc.

Selon un autre mode de mise en œuvre, qui pourra être mis en œuvre alternativement ou cumulativement avec les précédents, une exécution d'un accord d'exécution relatif à une liaison connectant une fonction du premier objet comprend une recherche d'une seconde liaison entre le premier objet et un troisième objet géographiquement proche du deuxième objet.

Ce mode de mise en œuvre permet de vérifier si, au-delà d'une liaison entre un premier et un deuxième objet qui est sur le point d'être activée, une liaison entre le premier objet communicant et un troisième objet communicant proche géographiquement du deuxième objet, serait plus pertinente.

Une recherche d'une seconde liaison peut s'effectuer en particulier selon la liste d'intrications régies par un accord d'exécution.

Selon une variante de ce mode de mise en œuvre, une recherche d'une seconde liaison entre le premier objet et un troisième objet géographiquement proche du deuxième objet comprend une recherche d'un résultat de pertinence de qualité de service.

Cette variante permet de baser une recherche d'une seconde liaison selon des critères de qualité de service, comme une recherche d'une meilleure expérience utilisateur pour un service souhaité.

Un moteur d'intrications disposé dans le réseau et doté d'une intelligence artificielle, peut alimenter au cours du temps la base de données de référencement des liaisons entre objets communicants. Un nouvel accord d'exécution peut ainsi être proposé automatiquement : dans un cas où un utilisateur acquiert une nouvelle tablette tactile type Ipad, cet utilisateur pourra se voir proposer un nouvel accord relatif à de nouvelles intrications.

Une recherche d'une seconde liaison peut s'effectuer par exemple à cause d'un critère d'indisponibilité du deuxième objet communicant.

Selon un autre mode de mise en œuvre, qui pourra être mis en œuvre alternativement ou cumulativement avec les précédents, une exécution d'un accord d'exécution relatif à une liaison connectant une fonction du premier objet comprend une distribution des rétributions de tiers associés à l'exploitation de ladite liaison.

Ce mode de mise en œuvre permet d'allouer automatiquement des rétributions aux tiers exploitant une liaison et les fonctions des objets correspondants. En particulier lorsque des enjeux financiers peuvent intervenir, les interactions entre objets communicants sont ainsi contrôlées par des accords contractualisés entre différents tiers, par exemple entre des utilisateurs d'objets et des fournisseurs de matériels et/ou de services associés en lien avec ces objets (constructeurs, opérateurs, etc.).

L'exécution d'un accord d'exécution vérifie les modalités de réalisation d'une intrication et permet une distribution automatisée des rétributions des tiers à travers le réseau, sans l'intervention d'un tiers de confiance.

Un accord d'exécution étant accessible de tout objet du réseau, tout tiers ou partie prenante d'un accord préalablement établi peut justifier de sa légitimité à recevoir une rétribution relative à cet accord. A l'inverse, tout tiers non intégré dans un accord peut justifier son préjudice à partir de traces d'exécution mémorisées dans le réseau et accessibles de tout objet du réseau.

Selon un autre mode de mise en œuvre, qui pourra être mis en œuvre alternativement ou cumulativement avec les précédents, une mémorisation dans le premier objet un accord d'exécution relatif à une liaison entre deux objets du réseau comprend également une mémorisation d'un accord d'exécution relatif à une liaison entre deux objets dudit ensemble ne connectant aucune des fonctions du premier objet.

Ce mode de mise en œuvre permet de répartir la charge de stockage des accords d'exécution sur tout ou partie des nœuds du réseau. Tout objet du réseau possède une base de données partagée qu'il met à disposition du protocole d'échanges de données mis en place au sein d'un réseau décentralisé.

De la même façon, la charge de stockage des traces d'exécution est répartie sur tout ou partie des nœuds du réseau.

Selon un aspect matériel, l'invention concerne un objet communicant qui gère des interactions via un réseau de communication avec un deuxième objet communicant auquel il est relié par une liaison connectant au moins une de ses fonctions à au moins une fonction du deuxième objet, le réseau incluant un ensemble d'objets communicants, l'objet comprenant un processeur et une base de données, configurés pour:
- mémoriser au moins un accord d'exécution relatif à une liaison entre deux objets communicants dudit ensemble d'objets ;
- activer ladite liaison connectant une fonction dudit objet communicant à une fonction du deuxième objet, cette activation comprenant :
- l'accès à un accord d'exécution relatif à ladite liaison connectant une fonction dudit objet communicant à une fonction du deuxième objet communicant (B), ledit accès comprenant la recherche dans les autres objets communicants du réseau de parties dudit accord d'exécution non mémorisées dans ledit objet communicant, et la mémorisation dans ledit objet communiquant desdites parties trouvées dans au moins un autre objet du réseau ;
- l'exécution dudit accord d'exécution relatif à la liaison connectant une fonction dudit objet communicant à une fonction du deuxième objet communicant.

Par intégration du procédé de l'invention dans des objets communicants, des objets permettent la mise en place d'un mode de stockage et de transmission d'informations d'accords d'exécution au sein d'un réseau de type décentralisé.

Ces objets constituent des nœuds du réseau et ont l'architecture matérielle d'un ordinateur conventionnel. Chacun comporte notamment un processeur, une mémoire vive de type RAM et une mémoire morte dans laquelle est enregistré un programme d'ordinateur conforme à l'invention.

Selon un aspect matériel, l'invention concerne un dispositif de génération qui génère un accord d'exécution entre deux objets contenus dans un réseau d'objets communicants, le dispositif comprenant un processeur et une base de données permettant de :
- référencer une liaison connectant au moins une fonction d'un premier objet à au moins une fonction d'un deuxième objet,
- établir un accord d'exécution relatif à la liaison correspondante,
- diffuser ledit accord d'exécution vers au moins une partie des objets communicants du réseau.

Un dispositif de génération permet de référencer des liaisons entre des objets communicants déjà présents ou intégrants un réseau d'objets, selon des fonctions associées aux objets. Dans un mode de mise en œuvre particulier, un moteur d'intrications permet d'automatiser la détection d'intrications entre objets communicants. Ce moteur d'intrications peut être, par exemple, intégré au sein d'un dispositif de génération.

Un dispositif de génération établit, à partir du référencement des intrications, des accords d'exécution entre des tiers, en particulier en échangeant directement ou indirectement avec eux. Une plateforme de médiation peut, via une interface homme-machine, guider un utilisateur sur les modalités à définir pour l'établissement d'un accord d'exécution.

Dans un mode de réalisation, la base de données mémorisant des liaisons entre objets communicants d'un réseau est intégrée dans un dispositif de génération. Dans une variante, la base de données est distribuée à travers un système de stockage décentralisé formé par des objets qui constituent un réseau de nœuds. Ce système est régi par des preuves de non falsification de données.

Une fois un accord établi, le dispositif de génération diffuse l'accord d'exécution au sein du réseau d'objets.

Selon un autre aspect matériel, l'invention concerne également des bases de données stockant des accords d'exécution et des traces d'exécution, ces bases de données étant intégrées dans des objets ou des réseaux d'objets.

Selon un autre aspect matériel, l'invention concerne également un programme d'ordinateur mis en œuvre dans des objets communicants.

Un tel programme peut utiliser n'importe quel langage de programmation. Il peut être téléchargé depuis un réseau de communication et/ou enregistré sur un support lisible par ordinateur.

L'invention vise également un support d'enregistrement lisible par un ordinateur sur lequel est enregistré un programme d'ordinateur comprenant des instructions de code de programme pour l'exécution des étapes du procédé de gestion des interactions selon l'invention tel que décrit ci-dessus. Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

Bien entendu, chacun des équipements (objet communicant, dispositif de génération) comporte des moyens logiciels tels que des instructions du programme informatique précité, ces instructions étant exécutées par des moyens physiques tels qu'au moins un processeur et une mémoire de travail.

L'invention sera mieux comprise à la lecture de la description qui suit, donnée à titre d'exemple et faite en référence aux dessins annexés sur lesquels :
La figure 1 illustre deux objets reliés par une liaison connectant une fonction du premier objet et une fonction du deuxième objet.
La figure 2 illustre une diffusion à travers un réseau décentralisé d'un accord d'exécution établi entre des tiers impliqués dans l'exploitation d'une liaison.
La figure 3 illustre les principales étapes réalisées dans un réseau d'objets pour la mise en œuvre du procédé de l'invention.
La figure 4 illustre une recherche d'une seconde liaison grâce à un moteur d'intrications.
La figure 5 illustre une distribution des rétributions entre des tiers impliqués dans l'exploitation de liaisons en fonction de la durée d'utilisation de celles-ci.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

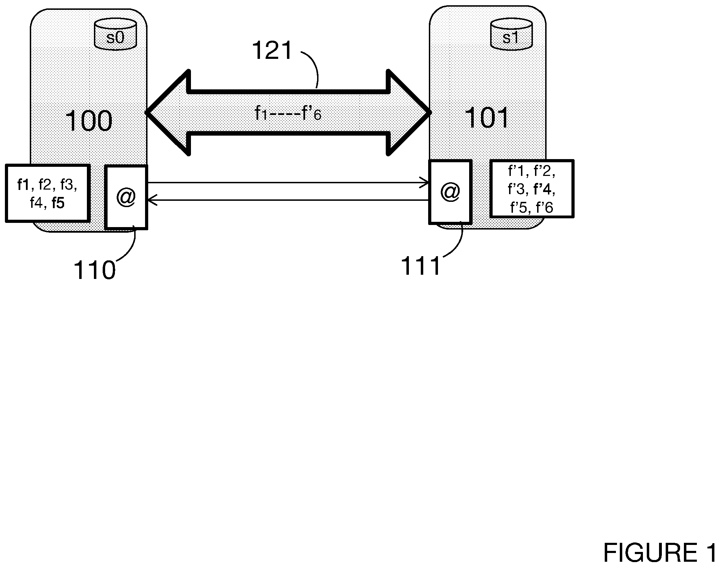

La figure 1 illustre deux objets communicants 100 et 101 disposant respectivement d'une adresse, par exemple une adresse IP, les identifiant au sein du réseau et notée respectivement 110 et 111.

Les deux objets se sont préalablement enregistrés auprès d'un serveur commun, par exemple un serveur Web ou un serveur de données dans un « cloud » ou un réseau privé : un objet transmet au serveur ses données de connexion ainsi que son identification qui est indépendante des données de connexion. Ainsi, grâce à ses données de connexion et à son identification, quel que soit le réseau ou l'endroit dans lequel se trouve un objet, cet objet pourra être joint par un autre objet du réseau. Les données de connexion peuvent comprendre par exemple une adresse IP et un port de communication TCP.

Les deux objets et leurs fonctions associées (f1, f2, f3, f4 et f5 pour l'objet 100, et les fonctions f'1, f'2, f'3, f'4, f'5 et f'6 pour l'objet 101) sont référencés auprès d'une base de données, par exemple centralisé par un tiers de confiance.

Une intrication (121) est également illustrée entre la fonction f1 du premier objet 100 et la fonction f'6 du deuxième objet 101.

Des bases de données locales intégrées dans les objets 100 et 101 objets sont notées respectivement s0, et s1. Ces bases sont notamment utilisées pour la mémorisation des accords d'exécution proposés dans le procédé de l'invention.

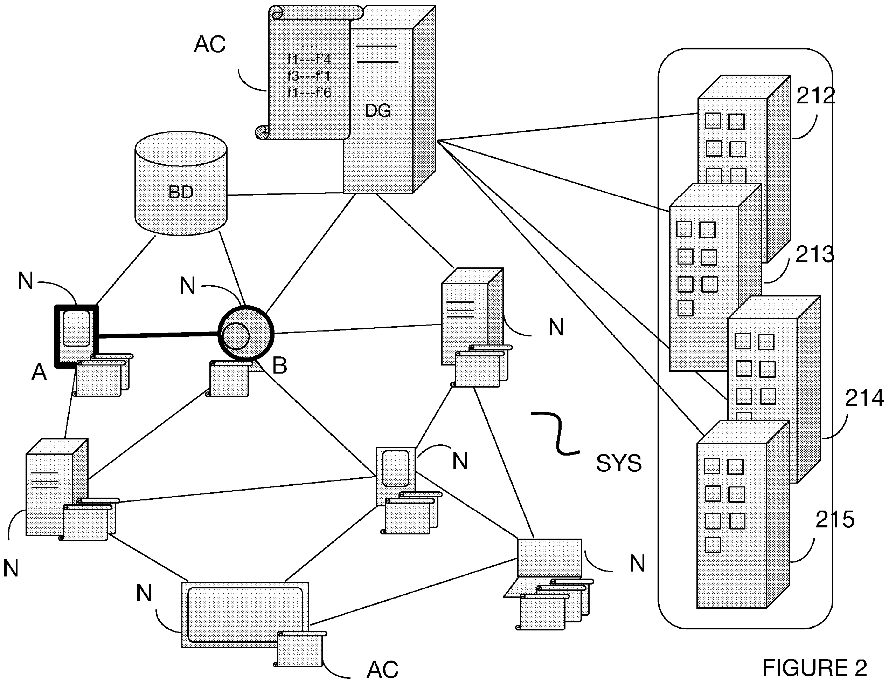

La figure 2 illustre une diffusion à travers un réseau décentralisé d'un accord d'exécution AC établi entre des tiers impliqués dans l'exploitation d'une liaison entre deux objets A et B.

Le procédé décrit une gestion automatisée des interactions entre deux objets A et B à travers l'utilisation d'une technologie (ou mode) de stockage et de transmission d'informations de type décentralisée. Par technologie « décentralisée » est entendue une technologie se basant sur une répartition de charges sur des ressources disponibles à travers un réseau : charges de stockage, de capacité de calcul, de partage, de traitement d'information, etc. Les ressources notées N sont potentiellement des ordinateurs, des serveurs, des smartphones ou autres objets connectés (montres, etc.), possédant respectivement une base de données partagée par le réseau. Par base de données partagée est entendu une base de données allouée aux informations circulant au sein d'un réseau utilisant une technologie de stockage et de transmission de type décentralisée, comme les blockchains.

Un système informatique SYS de la figure 2 comprend un dispositif de génération DG qui interroge une base de données BD stockant les adresses des objets communicants A et B présents au sein du réseau et une liste de leurs fonctions respectives. Cette base de données BD peut être notamment publique. Dans un mode de réalisation, le référencement des intrications est effectué et mémorisé par le dispositif DG. Dans une variante, le référencement des intrications est mémorisé selon un mode de stockage décentralisé à travers le réseau, en utilisant des bases de données locales des objets communicants.

Le dispositif de génération DG établit ensuite un accord d'exécution relatif à une ou plusieurs intrications entre deux objets A et B et le diffuse à travers le réseau, notamment vers les objets A et B dont les intrications sont impliquées dans l'accord d'exécution, afin que celui-ci soit mémorisé par l'ensemble ou une partie des objets du réseau.

Dans cette illustration, un smartphone A possède des caractéristiques (écran, accéléromètre, etc.) permettant de réaliser une intrication avec une caméra B située à distance, par exemple en bord de mer, et appartenant à un fournisseur de service 212 qui loue la caméra pour mettre les images à la disposition du public.

Le smartphone A et la caméra B ont publié dans la base de données BD la liste des capteurs, actionneurs, fonctions mécaniques, fonctions logicielles qu'ils sont en mesure de mettre en œuvre ou d'exécuter, ainsi que des programmes ou services annexes dont ils vont avoir besoin, par exemple, un opérateur réseau, un codec vidéo, un convertisseur de signal numérique en analogique, etc. Cette liste n'est bien sûr pas exhaustive, d'autres programmes ou services peuvent être proposés.

Lorsqu'une activation d'une intrication est programmée à un instant précis, au jour et à l'heure prévue par l'accord d'exécution, le smartphone A envoie une notification d'intrication à la caméra B. L'écran de A récupère les images capturées par B qui sont véhiculées via le réseau de télécommunication d'un opérateur 213, pour un volume de données par image et en utilisant un système de compression vidéo d'une société 214.

Les accéléromètres du smartphone A envoient vers B des informations de mouvement selon des coordonnées spatiales qui, grâce à un algorithme de conversion d'une société 215, permettent de piloter des moteurs pas à pas de la caméra B et de la faire pivoter dans une direction souhaitée.

Quand l'utilisateur du smartphone A est satisfait du service et qu'il décide de rendre la main, l'accord d'exécution comptabilise un nombre d'images envoyées, pour quelle capacité réseau, un nombre de mouvements qui ont été effectués, etc. Selon les termes de l'accord, il calcule alors une rétribution à accorder aux tiers par exemple pour un débit réseau utilisé, une location de la caméra, un nombre d'utilisations du système de compression vidéo, un nombre de fois que l'algorithme de conversion a été appelé, une quantité d'électricité qui a été utilisée pour l'alimentation de la caméra pendant la durée de l'intrication, etc. Dans un mode de réalisation, l'accord d'exécution génère une notification d'exécution avec le montant de chaque transaction, par exemple, de A vers 212, vers 213, vers 214, vers 215 etc. dans un registre de la blockchain. D'autres mouvements transactionnels peuvent être effectués (par exemple de B vers 212). Quand les transactions sont confirmées, c'est-à-dire quand toutes, ou au moins plusieurs copies du registre ont été mises à jour, les portefeuilles (appelés aussi « E-wallets » par l'homme du métier) des tiers ou parties prenantes d'une intrication, sont mis à jour.

Un accord d'exécution entre deux objets peut s'appuyer sur plusieurs intrications. Par exemple, pour deux smartphones possédant les mêmes fonctions, la vision par caméra et la réception de l'image sur un écran, il y aura au moins deux intrications possibles: vision/écran et écran/vision entre les deux smartphones. Ces deux intrications seront définies dans la blockchain et il sera possible de passer de l'une des intrications à l'autre ou même les faire fonctionner les deux en même temps.

Dans une variante non illustrée ici, une liaison dite complexe est définie comme une liaison impliquant plusieurs fonctions d'au moins un des objets.

Les accords d'exécution peuvent lancer une application à l'intérieur de la blockchain. Après la phase d'établissement d'un accord par le dispositif de génération DG, l'accord restera figé pendant toute la vie de l'accord. Dans notre exemple, rien ne peut être effacé de la blockchain mais on peut rendre un accord inopérant. Dans une variante cependant, la valeur d'au moins une variable pourra être entrée par un tiers de confiance. Par exemple, si l'exécution d'un accord repose sur le résultat d'un match sportif, le résultat du match sera intégré ultérieurement dans la blockchain afin que l'accord s'exécute selon cette valeur.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

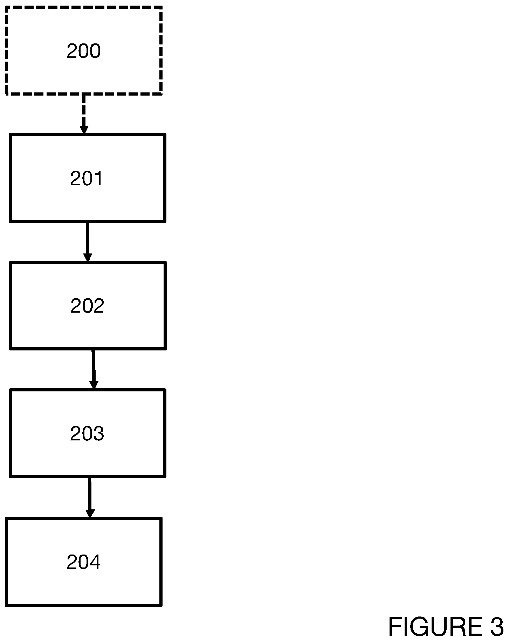

La figure 3 illustre les principales étapes réalisées dans un réseau d'objets pour la mise en œuvre du procédé de l'invention.

Lors de l'étape 200, à travers un système de référencement manuel ou automatisé, des objets et leurs fonctions sont référencés dans une ou plusieurs bases de données centralisées ou non centralisées.

Cette étape de référencement d'objets et de fonctions 200 précède l'étape de référencement d'intrications 201. Plusieurs intrications peuvent être référencées entre deux objets. Par exemple, peuvent être référencées quatre intrications entre les deux couples d'objets suivants, smartphone/haut-parleur et smartphone/caméra. En effet, un smartphone dispose d'un écran, d'un haut-parleur, d'un récepteur audio et d'un capteur de rotation : quatre fonctions sont donc associées au smartphone. A distance, se trouvent un haut-parleur qui possède un émetteur/récepteur (2 fonctions associées) et une caméra qui enregistre des images et possède un capteur (2 fonctions associées). Il y a donc deux intrications possibles entre le smartphone et le haut-parleur, et deux autres intrications entre le smartphone et la caméra.

Dans une deuxième étape 202, l'établissement d'un accord s'effectue de manière automatique ou de manière « assistée ». En effet, une plateforme d'un fournisseur de service tiers peut se positionner comme intermédiaire entre un utilisateur d'un objet et un dispositif de génération DG d'un accord d'exécution, par exemple via une interface web, afin de permettre à l'utilisateur de configurer les modalités d'un accord qu'il souhaite établir avec un ou plusieurs fournisseurs de matériels et/ou de services, en particulier selon des règles sur ses données personnelles contenues ou échangées à travers son objet. Par exemple, le propriétaire d'une montre connectée souhaite que les données d'activité générées et stockées par son objet ne soient pas transmises aux partenaires du constructeur de la montre, même si un applicatif d'un partenaire est intégré nativement dans la montre. Un utilisateur peut établir un accord dans ce sens.

Dans un mode de réalisation particulier, la configuration d'un accord d'exécution s'appuie sur une base de données BD, sur un dispositif de génération DG et sur un moteur d'intrications, par exemple placé au sein du dispositif DG et défini par une intelligence artificielle permettant d'automatiser la détection d'intrications au sein du réseau d'objets.

Dans une variante, le dispositif de génération diffuse l'accord dans un réseau d'objets avec des données supplémentaires permettant aux utilisateurs des objets d'être guidés via une interface homme-machine spécifique à cet accord.

Dans un mode de réalisation particulier, l'utilisation d'une technologie décentralisée, comme par exemple les « blockchains », permet de figer dans des données spécifiques, appelées aussi registres, transmises à travers un réseau, un accord d'exécution qui régit l'intrication de deux ou plusieurs objets communicants. Une fois l'accord créé, il ne pourra être modifié sauf en le détruisant. Par blockchain (chaine de bloc) est entendue une base de données distribuée qui gère une liste d'enregistrements protégés contre la falsification ou la modification par les objets constituants du réseau.

Dans une troisième étape 203, une activation d'une liaison s'initie par exemple par l'envoi d'une notification, dite notification d'intrication, du premier objet vers le deuxième objet, et permet des échanges de données entre ces objets pour exécuter les fonctions relatives à chaque objet associées à cette liaison. En effet, une activation d'une liaison par le premier objet s'effectue soit par l'intervention de l'utilisateur (programmée ou spontanée) ou soit par une exécution automatique de l'accord d'exécution.

Dans notre exemple, dans le même temps, des traces d'exécution d'une liaison sont mémorisées au sein du réseau. Dans un mode de réalisation particulier, l'utilisation d'un mode de stockage et de transmission de données décentralisé permet une diffusion de ces traces (ou preuves) d'exécution à partir des nœuds constituant le réseau décentralisé ; un nœud pouvant être un objet communicant. De même qu'un objet du réseau peut stocker tout ou au moins une partie d'un ou plusieurs accords d'exécution, un objet peut stocker tout ou partie des traces d'exécution d'une liaison. Pour accéder à une ou plusieurs parties d'un accord d'exécution ou traces d'exécution, un objet peut en faire la demande à un ou plusieurs objets du réseau d'objets. Dans un mode préféré, les accords d'exécution qui incluent une liaison connectant une fonction d'un objet, sont stockés dans leur entièreté dans cet objet.

Une vérification des traces d'exécution d'une liaison s'effectue lors de l'exécution d'un accord. Dans un mode de réalisation, une notification, dite notification d'exécution, est envoyée par le premier objet et/ou le deuxième objet relatifs à cette liaison respectivement au deuxième et/ou premier objet relatifs à cette liaison.

Dans une quatrième étape 204, une distribution des rétributions des tiers s'effectue lors de l'exécution de l'accord en mettant à jour les portefeuilles des tiers. Par portefeuilles est entendu les comptes virtuels des tiers vers lesquels des transferts de rétributions sont effectués.

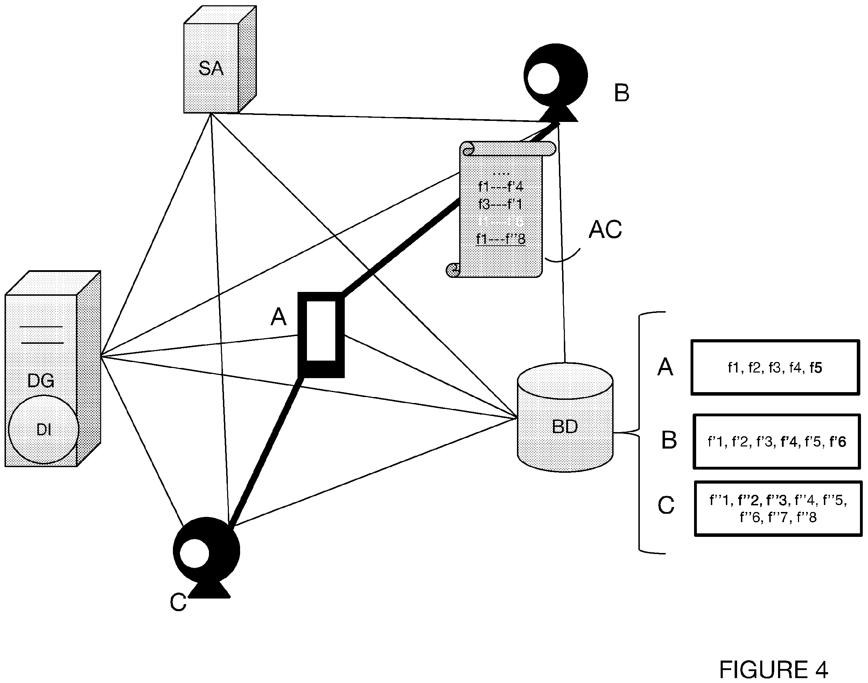

La figure 4 illustre une recherche d'une seconde liaison par un moteur d'intrications.

A travers une interface web d'une plateforme d'un fournisseur de services SA, un utilisateur d'un objet communicant peut se connecter à un service en ligne pour définir les modalités d'un accord d'exécution avec un ou plusieurs tiers.

Un dispositif de génération DG établit un accord et diffuse celui-ci au sein du réseau de type décentralisé, et donc en particulier vers les bases de données locales d'objets du réseau.

Dans ce mode de réalisation, l'établissement d'accords d'exécution par le dispositif de génération DG s'appuie sur une plateforme SA, sur une base de données BD et un moteur d'intrications DI permettant d'automatiser des intrications entre objets. Un moteur d'intrications identifie des intrications possibles afin de sélectionner des candidats compatibles ou idéaux de manière dynamique (voir ci-dessous un exemple d'intrications idéales). Dans ce mode de réalisation, le moteur d'intrications est localisé dans le dispositif de génération DG. Un moteur d'intrications permet également de codifier les échanges qui auront lieu pendant une intrication, trouver les partenaires et services annexes dont les échanges ont besoin et configurer des variables de contrôle de ces échanges.

Dans le présent texte, un moteur d'intrications est un module qui peut être mise en œuvre sous forme logicielle (ou « software »), auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array). »

Une géolocalisation des objets est définie en temps réel et permet un choix idéal d'intrications et d'objets les plus adaptés à la réalisation d'un service pour un ou des utilisateurs d'objets. En effet, cette géolocalisation est inscrite dans la blockchain. Un moteur d'intrications choisit entre différents objets notamment inclus dans un accord d'exécution et géolocalisés à proximité les uns des autres pour fournir, par exemple, un meilleur service (affichage de vidéos sur un écran de TV plutôt qu'un smartphone), dans le cas d'indisponibilité d'un objet, etc. Dans la figure 4, la liaison de la fonction f1 de l'objet A avec la fonction f'6 de l'objet B, incluse dans un accord AC établi entre les objets A et B, n'est pas activable car la fonction f'6 de l'objet B (en caractère gras) est temporairement indisponible. L'intrication de la fonction f1 de l'objet A avec la fonction f"6 de l'objet C, est alors effectuée. Un accord peut englober plusieurs intrications, en particulier d'objets différents. Dans un accord, il pourra être précisé le choix d'utiliser l'objet le plus performant disponible pour une fonction souhaitée. Au sein d'un accord, il peut être possible de changer d'intrications. Un accord peut inclure plusieurs objets comme plusieurs intrications possibles. L'accord fournit une liste de couples objet/intrication possibles.

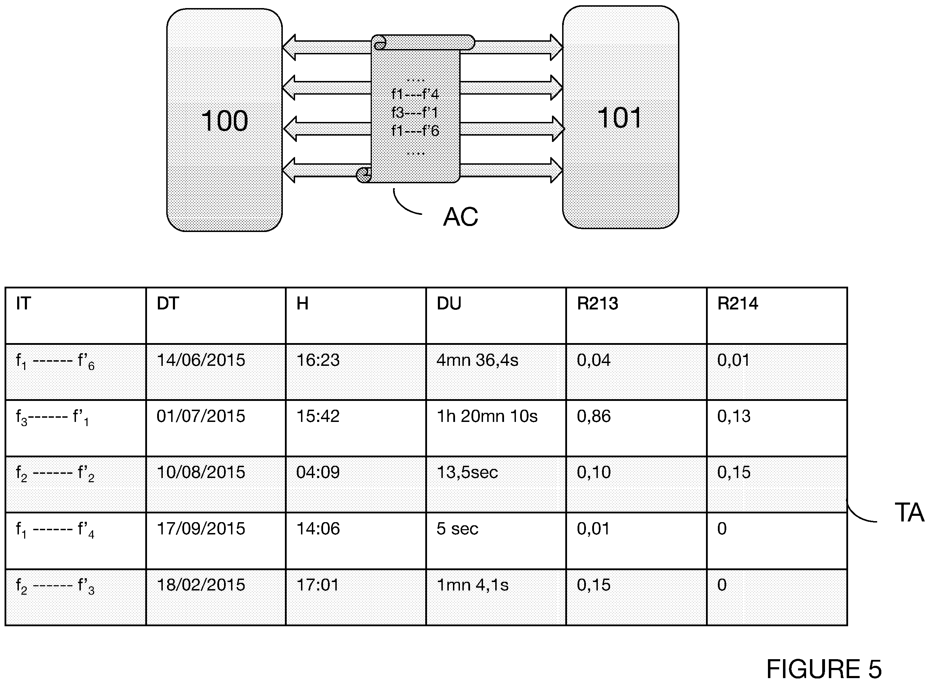

La figure 5 illustre une distribution des rétributions entre des tiers impliqués dans l'exploitation de liaisons en fonction de la durée d'utilisation de celles-ci. Dans le tableau TA, la première colonne IT indique des intrications incluses dans un accord AC établi entre le premier objet 100 et le deuxième objet 101, la deuxième colonne DT indique une date d'activation d'une liaison, la troisième colonne H indique une heure de début d'une activation d'une liaison, la quatrième colonne DU indique une durée d'activation d'une liaison, les cinquième et sixième colonnes R213 et R214 indiquent les rétributions calculées pour chacun des tiers impliqués dans l'exploitation d'une liaison selon une durée d'utilisation de la liaison. Par exemple, pour l'intrication connectant la fonction f2 du premier objet avec la fonction f'2 du deuxième objet effectuée, par exemple le 10/08/2015 pendant 13.5 secondes, le montant de la rétribution versée à la société 213 s'élève à 0.10€, et 0.15€ à la société 214.

Cet exemple de mise en œuvre permet de rétribuer les tiers en fonction d'une durée d'utilisation de la liaison sans l'intervention d'un tiers. La rétribution des tiers peut également être affiliée à d'autres paramètres de comptages (nombres d'images, capacité de la bande passante, etc.) que le temps d'utilisation, ou par exemple un comptage à l'acte. Pour une liaison donnée, chaque tiers peut définir le mode de rétribution qu'il souhaite.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et l'objet pour la mise en œuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et objets décrits ci-dessus n'incorporent pas la totalité des modules et fonctions décrits pour les modes de réalisation préférés.

## Revendications

1. **Procédé** de gestion des interactions via un réseau de communication entre un premier objet communicant (A) et un deuxième objet communicant (B) reliés par une liaison connectant au moins une fonction du premier objet à au moins une fonction du deuxième objet, le réseau incluant un ensemble d'objets communicants, le procédé comprenant dans le premier objet :
- la mémorisation d'au moins un accord d'exécution (AC) relatif à une liaison entre deux objets dudit ensemble d'objets ;
- l'activation de la liaison connectant une fonction du premier objet à une fonction du deuxième objet, ladite activation comprenant :
- l'accès à un accord d'exécution relatif à ladite liaison connectant une fonction du premier objet (A) à une fonction du deuxième objet (B), comprenant la recherche dans les autres objets communicants du réseau de parties dudit accord non mémorisées dans le premier objet, et la mémorisation dans le premier objet desdites parties trouvées dans au moins un autre objet du réseau ;
- exécuter ledit accord d'exécution relatif à la liaison connectant une fonction du premier objet à une fonction du deuxième objet.

2. Procédé de gestion selon la revendication 1, dans lequel l'exécution d'un accord d'exécution relatif à ladite liaison connectant au moins une fonction du premier objet à au moins une fonction du deuxième objet, comprend :
- accéder à des traces d'exécution de ladite liaison,
- vérifier des traces d'exécution de ladite liaison.

3. Procédé de gestion selon la revendication 1, dans lequel l'exécution d'un accord d'exécution relatif à ladite liaison connectant au moins une fonction du premier objet à au moins une fonction du deuxième objet, comprend la recherche d'une seconde liaison entre le premier objet et un troisième objet géographiquement proche du deuxième objet.

4. Procédé de gestion selon la revendication 3, dans lequel la recherche d'une seconde liaison entre le premier objet et un troisième objet géographiquement proche du deuxième objet, comprend la recherche d'un résultat de pertinence de qualité de service.

5. Procédé de gestion selon la revendication 1, dans lequel l'exécution d'un accord d'exécution relatif à une liaison connectant une fonction du premier objet, comprend distribuer des rétributions de tiers associés à l'exploitation de ladite liaison.

6. Procédé de gestion selon la revendication 1, dans lequel la mémorisation dans le premier objet d'un accord d'exécution relatif à une liaison entre deux objets dudit ensemble d'objets, comprend également la mémorisation d'un accord d'exécution relatif à une liaison entre deux objets dudit ensemble ne connectant aucune des fonctions du premier objet.

7. **Objet communicant** (A) apte à gérer des interactions via un réseau de communication avec un deuxième objet communicant (B) auquel il est relié par une liaison connectant au moins une de ses fonctions à au moins une fonction du deuxième objet, le réseau incluant un ensemble d'objets communicants, ledit objet communicant (A) comprenant un processeur et une base de données configurés pour:
- mémoriser au moins un accord d'exécution (AC) relatif à une liaison entre deux objets communicants dudit ensemble d'objets ;
- activer ladite liaison connectant une fonction dudit objet communiquant (A) à une fonction du deuxième objet, cette activation comprenant :
- l'accès à un accord d'exécution relatif à ladite liaison connectant une fonction dudit objet communicant (A) à une fonction du deuxième objet communicant (B), ledit accès comprenant la recherche dans les autres objets communicants du réseau de parties dudit accord d'exécution non mémorisées dans ledit objet communicant (A), et la mémorisation dans ledit objet communicant (A) desdites parties trouvées dans au moins un autre objet du réseau ;
- l'exécution dudit accord d'exécution relatif à la liaison connectant une fonction dudit objet communicant (A) à une fonction du deuxième objet communicant (B).

8. **Dispositif de génération** (DG) apte à générer un accord d'exécution entre deux objets contenus dans un réseau d'objets communicants tels que définis dans la revendication 7, le dispositif comprenant un processeur et une base de données configurés pour:
- référencer une liaison connectant au moins une fonction d'un premier objet (A) à au moins une fonction d'un deuxième objet (B),
- établir un accord d'exécution (AC) relatif à la liaison correspondante,
- diffuser ledit accord d'exécution vers au moins une partie des objets communicants du réseau.

9. **Programme** d'ordinateur apte à être mis en oeuvre sur un objet communicant (A) tel que défini dans la revendication 7, le programme comprenant des instructions de code qui, lorsqu'il est exécuté par un processeur, réalise les étapes d'un procédé selon l'une quelconque des revendications 1 à 6.

10. **Support** d'enregistrement lisible par un ordinateur sur lequel est enregistré un programme d'ordinateur comprenant des instructions de code de programme pour l'exécution des étapes d'un procédé de gestion des interactions, selon l'une quelconque des revendications 1 à 6.

## Patentansprüche

1. Verfahren zur Verwaltung der Interaktionen über ein Kommunikationsnetz zwischen einem ersten kommunizierenden Objekt (A) und einem zweiten kommunizierenden Objekt (B), die durch eine Verbindung aneinander angeschlossen sind, die mindestens eine Funktion des ersten Objekts mit mindestens einer Funktion des zweiten Objekts verbindet, wobei das Netz eine Gruppe kommunizierender Objekte aufweist, wobei das Verfahren im ersten Objekt umfasst:
- Speichern mindestens einer Ausführungsvereinbarung (AC) in Bezug auf eine Verbindung zwischen zwei Objekten der Gruppe von Objekten;
- Aktivieren der Verbindung, die eine Funktion des ersten Objekts mit einer Funktion des zweiten Objekts verbindet, wobei das Aktivieren umfasst:
- Zugriff auf eine Ausführungsvereinbarung in Bezug auf die Verbindung, die eine Funktion des ersten Objekts (A) mit einer Funktion des zweiten Objekts (B) verbindet, umfassend die Suche nach im ersten Objekt nicht gespeicherten Parteien der Vereinbarung in den anderen kommunizierenden Objekten des Netzes und Speicherung der in mindestens einem anderen Objekt des Netzes gefundenen Parteien im ersten Objekt;
- Ausführen der Ausführungsvereinbarung in Bezug auf die Verbindung, die eine Funktion des ersten Objekts mit einer Funktion des zweiten Objekts verbindet.

2. Verfahren zur Verwaltung nach Anspruch 1, wobei die Ausführung einer Ausführungsvereinbarung in Bezug auf die Verbindung, die mindestens eine Funktion des ersten Objekts mit mindestens einer Funktion des zweiten Objekts verbindet, umfasst:
- Zugreifen auf Ausführungsspuren der Verbindung,
- Überprüfen der Ausführungsspuren der Verbindung.

3. Verfahren zur Verwaltung nach Anspruch 1, wobei die Ausführung einer Ausführungsvereinbarung in Bezug auf die Verbindung, die mindestens eine Funktion des ersten Objekts mit mindestens einer Funktion des zweiten Objekts verbindet, die Suche einer zweiten Verbindung zwischen dem ersten Objekt und einem dritten Objekt umfasst, das sich geografisch nahe bei dem zweiten Objekt befindet.

4. Verfahren zur Verwaltung nach Anspruch 3, wobei die Suche einer zweiten Verbindung zwischen dem ersten Objekt und einem dritten Objekt, das sich geografisch nahe bei dem zweiten Objekt befindet, die Suche nach einem aussagekräftigen Ergebnis zur Dienstqualität umfasst.

5. Verfahren zur Verwaltung nach Anspruch 1, wobei die Ausführung einer Ausführungsvereinbarung in Bezug auf eine Verbindung, die mindestens eine Funktion des ersten Objekts verbindet, das Verteilen von Entgelten von Dritten umfasst, die an der Verwertung der Verbindung beteiligt sind.

6. Verfahren zur Verwaltung nach Anspruch 1, wobei die Speicherung einer Ausführungsvereinbarung in Bezug auf eine Verbindung zwischen zwei Objekten der Gruppe von Objekten im ersten Objekt auch die Speicherung einer Ausführungsvereinbarung über eine Verbindung zwischen zwei Objekten der Gruppe umfasst, die keine der Funktion des ersten Objekts verbindet.

7. Kommunizierendes Objekt (A), das dazu geeignet ist, Interaktionen über ein Kommunikationsnetz mit einem zweiten kommunizierenden Objekt (B), an das es durch eine Verbindung angeschlossen ist, die mindestens eine seiner Funktionen mit mindestens einer Funktion des zweiten Objekts verbindet, wobei das Netz eine Gruppe kommunizierender Objekte aufweist, wobei das kommunizierende Objekt (A) einen Prozessor und eine Datenbank umfasst, die zu Folgendem konfiguriert sind:
- Speichern mindestens einer Ausführungsvereinbarung (AC) in Bezug auf eine Verbindung zwischen zwei kommunizierenden Objekten der Gruppe von Objekten;
- Aktivieren der Verbindung, die eine Funktion des kommunizierenden Objekts (A) mit einer Funktion des zweiten Objekts verbindet, wobei diese Aktivierung umfasst:
- Zugriff auf eine Ausführungsvereinbarung in Bezug auf die Verbindung, die eine Funktion des kommunizierenden Objekts (A) mit einer Funktion des zweiten kommunizierenden Objekts (B) verbindet, wobei der Zugriff die Suche nach im kommunizierenden Objekt (A) nicht gespeicherten Parteien der Ausführungsvereinbarung in den anderen kommunizierenden Objekten des Netzes und die Speicherung der in mindestens einem anderen Objekt des Netzes gefundenen Parteien im kommunizierenden Objekt (A) umfasst;
- Ausführung der Ausführungsvereinbarung in Bezug auf die Verbindung, die eine Funktion des kommunizierenden Objekts (A) an eine Funktion des zweiten kommunizierenden Objekts (B) anschließt.

8. Vorrichtung zur Erzeugung (DG), die dazu konfiguriert ist, eine Ausführungsvereinbarung zwischen zwei Objekten zu erzeugen, die in einem Netz kommunizierender Objekte nach Anspruch 7 enthalten sind, wobei die Vorrichtung einen Prozessor und eine Datenbank umfasst, die zu Folgendem konfiguriert sind:
- Referenzieren einer Verbindung, die mindestens eine Funktion eines ersten Objekts (A) mit mindestens einer Funktion eines zweiten Objekts (B) verbindet,
- Erstellen einer Ausführungsvereinbarung (AC) in Bezug auf die entsprechende Verbindung,
- Verteilen der Ausführungsvereinbarung auf mindestens einen Teil der kommunizierenden Objekte des Netzes.

9. Computerprogramm, das dazu geeignet ist, auf einem kommunizierenden Objekt (A) nach Anspruch 7 umgesetzt zu werden, wobei das Programm Codeanweisungen umfasst, die bei Ausführung des Programms durch einen Prozessor die Schritte eines Verfahrens nach einem der Ansprüche 1 bis 6 durchführen.

10. Computerlesbares Speichermedium, auf dem ein Computerprogramm gespeichert ist, das Codeanweisungen für die Ausführung der Schritte eines Verfahrens zur Verwaltung von Interaktionen nach einem der Ansprüche 1 bis 6 umfasst.

## Claims

1. Method for managing interactions via a communication network between a first communicating object (A) and a second communicating object (B) linked by a link connecting at least one function of the first object to at least one function of the second object, the network including a set of communicating objects, the method comprising in the first object:
- the storage of at least one execution agreement (AC) relating to a link between two objects of said set of objects:
- the activation of the link connecting a function of the first object to a function of the second object, said activation comprising:
- access to an execution agreement relating to said link connecting a function of the first object (A) to a function of the second object (B), comprising the search in the other communicating objects of the network for parts of said agreement not stored in the first object, and the storage in the first object of said parts found in at least one other object of the network;
- executing said execution agreement relating to the link connecting a function of the first object to a function of the second object.

2. Management method according to Claim 1, wherein the execution of an execution agreement relating to said link connecting at least one function of the first object to at least one function of the second object comprises:
- accessing traces of execution of said link,
- checking traces of execution of said link.

3. Management method according to Claim 1, wherein the execution of an execution agreement relating to said link connecting at least one function of the first object to at least one function of the second object comprises the search for a second link between the first object and a third object geographically close to the second object.

4. Management method according to Claim 3, wherein the search for a second link between the first object and a third object geographically close to the second object comprises the search for a quality-of-service relevance result.

5. Management method according to Claim 1, wherein the execution of an execution agreement relating to a link connecting a function of the first object comprises distributing third-party commissions associated with the operation of said link.

6. Management method according to Claim 1, wherein the storage in the first object of an execution agreement relating to a link between two objects of said set of objects also comprises the storage of an execution agreement relating to a link between two objects of said set connecting none of the functions of the first object.

7. Communicating object (A) capable of generating interactions via a communication network with a second communicating object (B) to which it is linked by a link connecting at least one of its functions to at least one function of the second object, the network including a set of communicating objects, said communicating object (A) comprising a processor and a database configured to:
- store at least one execution agreement (AC) relating to a link between two communicating objects of said set of objects;
- activating said link connecting a function of said communicating object (A) to a function of the second object, this activation comprising:
- access to an execution agreement relating to said link connecting a function of said communicating object (A) to a function of the second communicating object (B), said access comprising the search in the other communicating objects of the network for parts of said execution agreement not stored in said communicating object (A), and the storage in said communicating object (A) of said parts found in at least one other object of the network;
- the execution of said execution agreement relating to the link connecting a function of said communicating object (A) to a function of the second communicating object (B).

8. Generation device (DG) capable of generating an execution agreement between two objects contained in a network of communicating objects as defined in Claim 7, the device comprising a processor and a database configured to:
- reference a link connecting at least one function of a first object (A) to at least one function of a second object (B),
- establish an execution agreement (AC) relating to the corresponding link,
- broadcast said execution agreement to at least some of the communicating objects of the network.

9. Computer program that can be implemented on a communicating object (A) as defined in Claim 7, the program comprising code instructions which, when the program is run by a processor, perform the steps of a method according to any one of Claims 1 to 6.

10. Computer-readable storage medium on which is stored a computer program comprising program code instructions for executing the steps of a method for managing interactions, according to any one of Claims 1 to 6.
